# EUROPÄISCHE PATENTSCHRIFT

(11) **EP 2 686 494 B1**
(45) Veröffentlichungstag und Bekanntmachung des Hinweises auf die Patenterteilung: **28.02.2018**
(21) Anmeldenummer: 12709799.6
(22) Anmeldetag: 14.03.2012
(51) Int. Cl.: E03C 1/04, E03C 1/05

(54) **SANITÄRARMATUR MIT EINEM ARMATURENGEHÄUSE UND EINER ELEKTRISCHEN KONTROLLEINHEIT**
SANITARY FITTING COMPRISING A FITTING HOUSING AND AN ELECTRICAL CONTROL UNIT
ROBINETTERIE SANITAIRE POURVUE D'UN BOÎTIER DE ROBINETTERIE ET D'UNE UNITÉ DE CONTRÔLE ÉLECTRIQUE

(30) Priorität: 14.03.2011 DE 102011013914
(43) Veröffentlichungstag der Anmeldung: 22.01.2014
(73) Patentinhaber: Aquis Sanitär AG, 9445 Rebstein (CH)
(72) Erfinder: WAWRLA, Andreas, CH-9443 Widnau (CH)
(74) Vertreter: Otten, Roth, Dobler & Partner mbB Patentanwälte
(86) Internationale Anmeldenummer: PCT/EP2012/001132
(87) Internationale Veröffentlichungsnummer: WO 2012/123112

(56) Entgegenhaltungen:
- EP-A2- 1 267 003
- DE-A1- 10 022 350
- DE-U1- 8 902 238
- JP-A- 2008 248 474

## Beschreibung

Die Erfindung betrifft eine "Sanitärarmatur mit einem Armaturengehäuse und einer Kontrolleinheit" nach dem Oberbegriff des Anspruchs 1.

Zum Beispiel sind aus den Druckschriften DE 100 22 350 A1 oder DE 10 2006 060 929 B4 Sanitärarmaturen mit einem Armaturengehäuse und einer Kontrolleinheit bekannt, wobei ein Absperrventil innerhalb eines Armaturenhalters angeordnet ist. Der Armaturenhalter ist und bleibt fest mit dem Montageort der Armatur verbunden. Der Montageort kann hierbei ein Sanitärkörper wie ein Waschbecken etc. oder eine Arbeitsplatte sein.

Dagegen kann das Armaturengehäuse einfach vom Armaturenhalter gelöst werden, wobei gleichzeitig eine oder mehrere Absperrventile die Wasserleitungen absperren bzw. verriegeln. Entsprechend werden die Wasserleitungen beim Anschließen des Armaturengehäuses am Armaturenhalter zugleich wieder geöffnet.

Diese Armaturen ermöglichen beispielsweise eine Wartung oder eine Reparatur einzelner Komponenten der Armatur wie z.B. Mischventil, Schmutzfilter oder bei elektrischen Armaturen auch ein Austausch der Batterien/Akkus bzw. weiterer elektrischer Komponenten, ohne dass Wasser aus den Leitungen austritt und ohne dass die üblicherweise unterhalb des Waschbeckens angeordneten Eckventile der Wasserzuleitungen verschlossen werden müssen.

Dies ist von Vorteil, da z.B. bei Badewannen oder dergleichen derartige Eckventile nicht (leicht) zugänglich bzw. nicht vorhanden sind. Letzteres trifft vor allem auch im öffentlichen oder halböffentlichen Raum zu, wo derartige Eckventile durch Vandalismus manipuliert oder sogar beschädigt werden würden.

Gerade für die Anwendungen im öffentlichen oder halböffentlichen Raum sind jedoch eingangs erwähnte leicht demontierbare Armaturen gerade aufgrund der Problematik Vandalismus nicht einsetzbar, da diese bereits innerhalb kurzer Zeit beschädigt oder gar entfernt werden würden.

Darüber hinaus sind bereits Systeme bekannt, wobei Turbinen zur Stromerzeugung eingesetzt werden, um den Energiebedarf von elektronischen Sanitäreinrichtungen ganz oder teilweise zu erzeugen. Hierdurch kann ggf. ein Netzanschluss entfallen, was gerade bei einer Nachrüstung bzw. Austausch von Sanitärarmaturen an bestehenden Montageorten durch elektrische Armaturen von Vorteil ist. So wird beispielsweise in der DE 39 05 759 eine Wasserarmatur mit Turbine offenbart, wobei die Turbineneinheit innerhalb eines geschlossenen Rohres sitzt.

In der Druckschrift EP 0 400 688 B1 wird ebenfalls eine Wasserarmatur beschrieben, die eine Turbine mit Elektrogenerator beinhaltet. Die Turbine sitzt hierbei innerhalb eines wasserführenden Gehäuses, das über einen Deckel zu öffnen und zu schließen ist. Oberhalb des Deckels sitzt die Generator- und Akkumulatoreinheit, die mit der Turbine über eine Antriebswelle verbunden ist.

Die Druckschrift JP2008 248 474 A1 offenbart eine Sanitärarmatur mit Generator einer Turbine unter einem Montagedeckel.

Aus der EP 1267003 A1 ist zudem eine Turbine mit Generator im Bereich des Auslaufes bekannt.

Bei den genannten Armaturen zum Stand der Technik ist es von Nachteil, dass die Turbine im Betrieb nicht ohne großen Aufwand gewartet oder ausgetauscht werden kann.

Aufgabe der Erfindung ist es, eine Sanitärarmatur der eingangs genannten Art vorzuschlagen, die mit besonders wenig Aufwand gewartet oder repariert werden kann, gerade auch in Anwendungen, bei denen die Anforderungen in Bezug auf mutwillige Zerstörungen (Vandalismus) von erheblicher Bedeutung sind.

Die Aufgabe wird von einer Sanitärarmatur mit den Merkmalen des Anspruchs 1 gelöst. Durch die in den abhängigen Ansprüchen genannten Maßnahmen sind vorteilhafte Ausführungen und Weiterbildungen der Erfindung möglich.

So ist die Sanitärarmatur gemäß der Erfindung dadurch gekennzeichnet, dass innerhalb des Armaturengehäuses wenigstens eine ein zweites Stellglied aufweisende Absperrvorrichtung zum Absperren der Wasserleitung angeordnet ist und dass das zweite Stellglied eine Abtrennung an einer Trennstelle ermöglicht, wobei das zweite Stellglied dadurch betätigt wird, dass das erste Stellglied demontiert wird, so dass zugleich das zweite Stellglied verschlossen ist.

Die besonderen Vorteile einer Verknüpfung der Turbine mit dem Montagedeckel und der Trennstelle sind u.a. dass die Turbine mit Generator nicht nur sehr gut bei demontiertem Montagedeckel zugänglich sind, sondern auch dass eine Wartung oder ein Auswechseln bzw. Reparatur der vergleichsweise mechanisch und fluiddynamisch stärker beanspruchten bzw. störungsanfälligen Turbine mit Lagerung als auch mit dem Generator ohne großen Aufwand verwirklicht werden kann.

Dadurch, dass die Turbine im Bereich der Gehäuseöffnung angeordnet ist, wird erreicht, dass diese besonders leicht zugänglich für Wartungs- und Reparaturzwecke ist.

Darüber hinaus ist gemäß der Erfindung eine wenigstens im Bereich der Turbine vom Gehäuse separate Wasserleitung vorgesehen, in der die Turbine bzw. das Turbinengehäuse angeordnet ist. So kann sogar bei laufendem Betrieb, d. h. bei Wasserdurchfluss bzw. Wasserauslauf, die Turbine bzw. die entsprechenden Turbinenkomponenten kontrolliert bzw. vermessen werden. Dies betrifft zum einen die mechanischen Turbinenkomponenten wie Schaufelrad oder Lagerung, als auch die elektrischen Komponenten wie elektrischer Generator, Stromspeicher bzw. Stromspeicherelektronikkomponenten oder dergleichen.

In einer vorteilhaften Ausführung werden auch ein Akkumulator und/oder ein Steuergerät zur Armaturensteuerung im Bereich der Gehäuseöffnung angeordnet.

Grundsätzlich ist gemäß der Erfindung von großem Vorteil, wenn die Turbine einschließlich Generator sowie gegebenenfalls eines Stromspeichers oder der gleichen unterhalb des Montagedeckels im Armaturengehäuse vorgesehen ist. Hierdurch wir die Zugänglichkeit dieser vorteilhafter Komponenten im Vergleich zum Stand der Technik deutlich verbessert. Generell ermöglicht die erfindungsgemäße Anordnung der Turbine gegebenenfalls mit Generator und/oder weiteren Komponenten eine Optimierung der Wartung, der Reparatur und/oder des Platzbedarfs.

Mit Hilfe des erfindungsgemäßen Montagedeckels in Kombination mit der innerhalb des fest verbauten Armaturengehäuses angeordneten, wenigstens eine einen elektrischen Generator antreibende Turbine zur Nutzung der Strömungsenergie des Wasserflusses wird erreicht, dass diese nicht nur platzsparend, sondern auch sicher gegen Zerstörung untergebracht werden kann.

Zudem ist gemäß der Erfindung die Turbine im Bereich des Wasserauslaufs angeordnet, d. h. im Bereich des Wasserflusses bzw. der Wasserleitung der erfindungsgemäßen Sanitärarmatur, in dem ein vergleichsweise geringer Druck vorhanden ist. Eine entsprechende Anordnung im Bereich des Wasserauslaufs ermöglicht in Vorteilhafterweise eine besonders gute Zugänglichkeit zu den betreffenden Komponenten. Vorteilhafterweise ist die Turbine bzw. das Turbinenschaufelrad derart ausgebildet, dass dies bei vergleichsweise geringem Druck einen relativ hohen Wirkungsgrad aufweist. Hierbei wird vor allem die Umwandlung der Strömungsenergie in mechanische Energie und anschließend in elektrische Energie mit Hilfe des elektrischen Generators vor allem durch den Volumenstrom verwirklicht. Eine Anpassung der Turbine bzw. der wenigstens einen Turbinenschaufel an diese besonderen hydraulischen Rahmenbedingungen führt zu einer vorteilhaften Energieausbeute.

Auch ist gemäß der Erfindung innerhalb des Armaturengehäuses wenigstens eine ein zweites Stellglied aufweisende Absperrvorrichtung zum Absperren der Wasserleitung vorgesehen. Hierbei sperrt das zweite Stellglied vorzugsweise den Wasserfluss bzw. die Wasserleitung/Wasserleitungen in vorteilhafter Weise ab, so dass nachgeschaltete hydraulische und gegebenenfalls elektrische Komponenten wie z.B. Schmutzfilter, Mischventil, Durchflussventil, Durchflussbegrenzer Strahlregler, die Turbine mit elektrischem Generator, Wasserleitungsabschnitte, Dichtungen oder dergleichen ohne Wasseraustritt gewartet, insbesondere entfernt, d.h. ausgebaut, und ersetzt bzw. repariert werden können. Hierfür ist gemäß der Erfindung kein üblicherweise unterhalb des Sanitärkörpers wie Waschbecken oder dergleichen notwendig bzw. dieses muss nicht zusätzlich abgedreht bzw. verschlossen werden. Dementsprechend kann dieses Eckventil bzw. vorgelagerte Sperrventil bei einer Verwendung der erfindungsgemäßen Sanitärarmatur auch vollständig bzw. immer entfallen, was Kosten und Montageaufwand reduziert.

Vorzugsweise ist das Armaturengehäuse am Montageort fest fixierbar und der Montagedeckel gesichert gegen mutwillige Zerstörung am Armaturengrundkörper angeordnet bzw. montiert. Hierfür kann dieser in vorteilhafter Weise unauffällig angebracht werden. Beispielsweise kann der Rand als Designlinie "versteckt" bzw. getarnt werden, so dass unbedarfte Personen gar nicht erkennen, dass hier ein separater Deckel vorhanden ist.

Zum anderen kann ein Spezialwerkzeug zum Lösen bzw. Demontieren des Montagedeckels vorgesehen werden. Auch hiermit kann alternativ oder in Kombination mit der "Tarnung" ein Demontieren durch Vandalismus wirkungsvoll verhindert werden.

Vorteilhafterweise ist die Turbine im Wesentlichen horizontal positioniert.

Vorzugsweise ist das zweite Stellglied in Strömungsrichtung des Wasserflusses vor dem ersten Stellglied angeordnet. Hierdurch braucht das erste Stellglied bzw. Ventil nicht betätigt werden, um ggf. relevante Komponenten der Armatur gemäß der Erfindung auszubauen bzw. zu warten.

In einer vorteilhaften Variante der Erfindung ist die Wasserleitung im Bereich der Turbine als Turbinengehäuse ausgebildet. Hiermit können die Strömungsverhältnisse an einem oder mehreren Turbinenrädern optimiert und somit kann der elektrische Wirkungsgrad verbessert werden.

Darüber hinaus kann bei dieser vorteilhaften Variante der Erfindung bei demontiertem Montagedeckel die Turbine einschließlich Generator und gegebenenfalls weiterer Komponenten der Energieerzeugung bzw. Speicherung selbst im Betrieb kontrolliert bzw. vermessen, überprüft werden. Dies ist vor allem bei einem Auftreten von einem Fehler bzw. einer Beeinträchtigung der Turbinenkomponenten von wesentlicher Bedeutung, um den konkreten Fehler bzw. die Beeinträchtigung/Beschädigung ermitteln zu können. Demzufolge wird durch die erfindungsgemäße Ausbildung der Sanitärarmatur mit im Bereich des Monatagedeckels angeordneter Turbine und Generator etc. die Zugänglichkeit bzw. Reparatur und Wartungsfreundlichkeit gegenüber dem Stand der Technik erheblich verbessert. Dies ist vor allem für die vergleichsweisen kleindimensionierten, mechanischen Komponenten des Energieerzeugungssystems mit Turbine und gegebenenfalls Übersetzungsgetriebe etc. von besonderer Bedeutung. Gemäß der Erfindung kann nicht nur eine vorteilhafte Kontrolle der Komponenten der Energieerzeugung mit einer Turbine, sondern auch Fehleranalyse und Austausch des Gesamtsystems bzw. einzelner Komponenten verwirklicht werden.

Grundsätzlich kann eine Drehachse der Turbine bzw. des/der Turbinenräder konzentrisch bzw. in Verlängerung mit einer Drehachse des elektrischen Generators angeordnet werden. Dies ist bei vergleichsweise langen und ggf. relativ dünnen Sanitärarmaturen bzw. Bereichen von Vorteil.

Vorzugsweise ist eine Drehachse eines Turbinenschaufelrades der Turbine im Wesentlichen parallel zu einer Rotationsachse des Generators angeordnet. Dies ist vor allem dann von besonderem Vorteil, wenn zwischen der Turbine und dem Generator ein Übersetzungsgetriebe angeordnet ist, um die elektrische Stromerzeugung durch höhere Drehzahlen des Generators zu verbessern. Das Übersetzungsgetriebe kann dann derart ausgebildet werden, dass der Parallelversatz überbrückt und zugleich eine höhere Drehzahl des Generators verwirklicht wird. Hiermit können besonders vorteilhafte Übersetzungsverhältnisse verwirklicht werden, insbesondere höhere bzw. bessere Übersetzungsverhältnisse als bei konzentrischer bzw. hintereinander angeordneten Komponenten.

Vorteilhafterweise sind der Generator und/oder das Übersetzungsgetriebe innerhalb eines wasserdichten Generatorgehäuses angeordnet. Hiermit wird ein vorteilhafter Schutz der elektrischen und/oder vergleichsweise empfindlichen mechanischen Komponenten erreicht.

In vorteilhafter Weise ist der Querschnitt der Gehäuseöffnung größer als ein Querschnitt der Turbine und/oder des Generators und/oder des Übersetzungsgetriebes und/oder des Generatorgehäuses und/oder des ersten Stellglieds und/oder eines Schmutzfilters zum Filtern des Wasserflusses und/oder wenigstens eines Durchflussreglers zum Regeln der Wasserflussmenge. Hiermit kann das elektrische bzw. erste Stellglied und/oder der Schmutzfilter und/oder der Durchflussbegrenzer und/oder die Turbine und/oder der Generator und/oder das Getriebe etc. in vorteilhafter Weise jeweils einzeln und/oder gemeinsam als Service- bzw. Baueinheit über die freie Montageöffnung aus dem Armaturengehäuse heraus genommen werden. Eine Demontage der gesamten Armatur oder des Armaturengehäuses kann entfallen. Dies ist gerade unter dem Gesichtspunkt Vandalismus im öffentlichen oder halböffentlichen Raum vor allem für die Wartung/Service bzw. Reparatur von großem Vorteil. Nicht nur hydraulische sondern auch elektrische Komponenten können gemäß der Erfindung durch die Montageöffnung in vorteilhafter Weise entnommen und wieder eingesetzt werden.

Vorteilhafterweise sind wenigstens ein Schmutzfilter zum Filtern des Wasserflusses und/oder wenigstens ein Durchflussregler zum Regeln der Wasserflussmenge vorgesehen. Hiermit wird erreicht, dass das elektrische bzw. erste Stellglied bzw. Durchflussventil als Service- bzw. Ventileinheit mit wesentlichen hydraulischen Komponenten ausgebildet ist und in vorteilhafter Weise aus dem Armaturengrundkörper ausgebaut und wieder eingebaut werden kann. Zum Beispiel für Wartung, Service, Reparatur und Ersatz. Dies verbessert die wirtschaftliche Betriebsweise der Sanitärarmatur gemäß der Erfindung.

Vorzugsweise ist wenigstens eine Betätigungseinheit zum Betätigen des zweiten Stellgliedes vorgesehen. Bei einem mechanischem ersten Stellglied bzw. Durchflussventil kann dies als ein Drehgriff und/oder Hebel und/oder als der Montagedeckel ausgebildet werden.

In einer besonderen Weiterbildung der Erfindung ist die Betätigungseinheit als Fixiervorrichtung zum Fixieren und Lösen des elektrischen bzw. ersten Stellgliedes und/oder der Ventil- bzw. Serviceeinheit ausgebildet. Hiermit wird erreicht, dass bereits beim Demontieren bzw. Lösen des elektrischen Stellgliedes bzw. der Serviceeinheit die Wasserleitung bzw. der Wasserfluss abgesperrt bzw. blockiert wird. Entsprechendes kann auch in Bezug auf den Schmutzfilter und/oder Durchflussbegrenzer und/oder die Turbine und/oder den elektrischen Generator oder dergleichen realisiert werden. Das heißt, dass bereits mit dem Lösen/Demontieren bzw. Trennen des ersten Stellgliedes und/oder der Serviceeinheit zugleich bzw. unmittelbar miteinander gekoppelt auch das bis dahin geöffnete zweite Stellglied/Absperrventil bzw. die Absperrvorrichtung verschlossen wird. Somit wird die abgesperrte Wasserleitung zugleich durchtrennt. Entsprechendes trifft auf den Montagevorgang bzw. das Fixieren des ersten Stellgliedes/Serviceeinheit und dem damit gekoppelten Öffnen des zweiten Stellgliedes bzw. der Absperrvorrichtung zu.

Vorzugsweise erfolgt die Absperrung des zweiten Stellgliedes wenigstens teilweise durch eine Rotationsbewegung bzw. einen Rotationsweg, insbesondere durch Rotation beim Lösen des ersten bzw. elektrischen Stellgliedes. Beispielsweise ist die Fixiervorrichtung als Bajonettverschluss ausgebildet. Hiermit wird eine vorteilhafte Absperrung und Abdichtung der Wasserleitung bzw. des Wasserflusses in der Armatur erreicht. Die Ventileinheit bzw. das erste Stellglied oder dergleichen wird Beispielsweise über einen Bajonett (z.B. 60 Grad) beispielsweise im Gegenuhrzeigersinn gedreht und dann ist das zweite Stellglied bzw. Serviceventil zu und das erste Stellglied bzw. die ganze Ventileinheit mit Filter, Durchflussregler und Magnetventil etc. kann entnommen werden. Der Einbau erfolgt in umgekehrter Reihenfolge.

Grundsätzlich kann das erste und/oder durchaus das zweite Stellglied als rein mechanisches Absperrventil mit einem Betätigungselement ausgebildet werden, das als Drehgriff, Hebel oder dergleichen ausgebildet ist. Alternativ oder in Kombination hierzu kann auch ein elektrisches und ggf. zusätzlich manuell betätigbares erstes Stellglied/Ventil vorgesehen werden, mit dem der Wasserauslauf reguliert wird. Bei einer elektrischen Betätigung kann dies in vorteilhafter Weise mittels eines Sensors, IR-Sensor oder dergleichen, und/oder mittels eines elektrischen Schalters als Betätigungselement erfolgen.

Es ist auch denkbar, den Montagedeckel als Betätigungselement des zweiten Stellgliedes bzw. Absperrventils auszubilden und/oder mit dem Montagedeckel eine Sperreinheit in Wirkverbindung zu bringen, so dass z.B. ein Mechanismus das zweite Stellglied betätigt. Hiermit wird erreicht, dass bereits beim Demontieren bzw. Öffnen des Montagedeckels der Wasserfluss abgesperrt bzw. blockiert wird.

In einer vorteilhaften Variante der Erfindung umfasst der Montagedeckel wenigstens ein Betätigungselement zum Betätigen vor allem des ersten und/oder ggf. des zweiten Stellgliedes. Hiermit kann in vorteilhafter Weise der Wasserauslauf manuell durch den Benutzer gestartet und/oder beendet werden.

Vorteilhafterweise umfasst der Montagedeckel wenigstens eine Solarzelle zur solaren Stromerzeugung und/oder eine Anzeigeeinheit zum Anzeigen von Parametern des Wasserflusses und/oder von Parametern der Kontrolleinheit. Hiermit kann eine weitgehend energieautarke Betriebsweise und/oder eine vorteilhafte Anzeige wesentlicher Parameter oder Informationen in Bezug zur Sanitärarmatur gemäß der Erfindung für den Benutzer angezeigt werden. Beispielsweise Ist-Temperatur des Wassers, eingestellte Soll-Temperatur, Störung ja/nein bzw. welche Komponente, Zeitautomatik, eingestellte Wasserauslaufdauer, Energiereserve der Batterie/Akku oder dergleichen.

Besondere Ausführungen der erfindungsgemäßen Sanitärarmatur können in Kombinationen oder als Alternativen realisiert werden, wobei es sich jeweils um eine elektronische Sanitärarmatur handelt, wobei im Armaturenkörper ein Absperrventil für den Wasserzufluss integriert ist, das vorzugsweise durch eine Einheit geöffnet bzw. geschlossen werden kann, das bei Entnahme/Einsetzen eines Servicemoduls oder dergleichen geöffnet/geschlossen wird (Einheit im Weiteren = Servicemodul)
- das Servicemodul das Betätigungselement des Absperrventils ist,
- Absperrventil durch eine rotative Bewegung geöffnet/geschlossen wird,
- dass das Servicemodul ein Ventil beinhaltet,
- dass das Servicemodul einen Mengenbegrenzer beinhaltet,
- dass das Servicemodul einen Schmutzfilter beinhaltet,
- dass das Servicemodul mit einer rotativen Bewegung z.B. Bajonettverschluss montiert/demontiert wird,
- dass das Servicemodul mit einer Farbkodierung zur Unterscheidung unterschiedlicher Ausführungen ausgeführt ist,
- dass das Servicemodul nur positionierend eingesetzt / entnommen werden kann.

Besondere Vorteile der Erfindung:
Normale Waschtischarmaturen werden meist durch Schläuche oder Rohre an Eckventile angeschlossen. Die Eckventile dienen dazu, die Wasserversorgung zu unterbrechen, wenn an der Armatur Reparatur- oder Wartungsarbeiten durchgeführt werden müssen. Solche Wartungsarbeiten bestehen z.B. darin, dass die Schmutzsiebe gereinigt oder ausgetauscht werden müssen. Häufig sind die Eckventile nur schlecht zugänglich - unterhalb des Waschbeckens und oftmals besonders schwierig durch Verbauten unterhalb der Waschbecken

Gemäß der Erfindung wird erreicht, die Wartungs- und Reparaturarbeiten besonders einfach und gut zugänglich zu ermöglichen. Die Erfindung ermöglicht, ohne Demontage der Armatur und ohne Betätigung irgendwelcher Absperrorgane für die Wasserversorgung sämtliche Arbeiten an allen hydraulischen Komponenten "oberhalb des Waschbeckens" durchzuführen.

Durch Entfernen der Serviceeinheit wird vorzugsweise automatisch die Wasserversorgung (innerhalb des Armaturenkörpers) unterbrochen / abgesperrt. Damit können alle Wartungsarbeiten bequem und einfach vorgenommen werden. Bei erneutem Einsetzen wird das integrierte Absperrventil wieder geöffnet und die Armatur ist für den Einsatz bereit.

### Ausführungsbeispiel

Ein Ausführungsbeispiel der Erfindung ist in der Zeichnung dargestellt und wird nachstehend anhand der Figuren unter Angabe weiterer Vorteile näher erläutert.

Im Einzelnen zeigen:

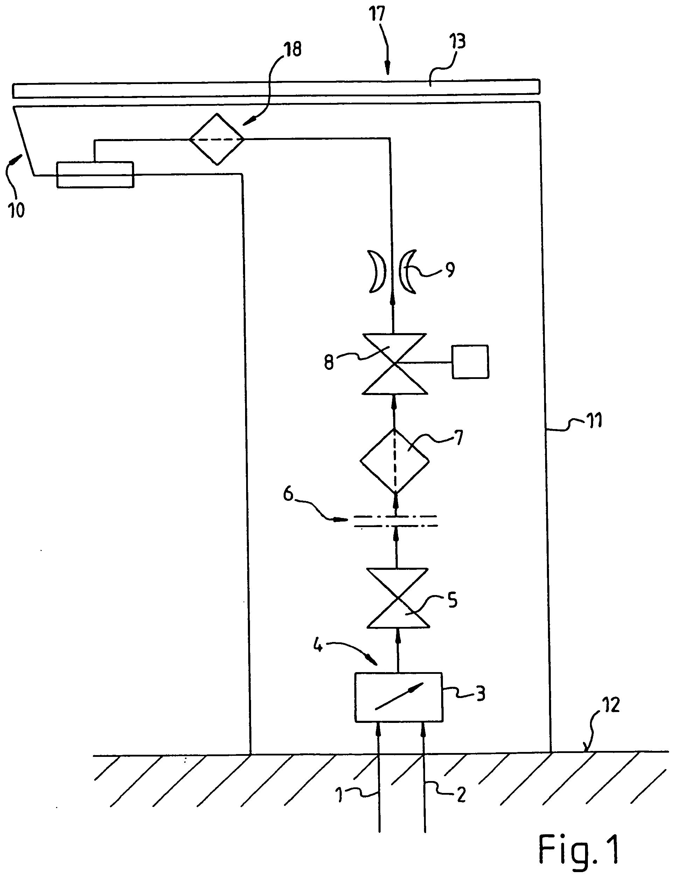

- Figur 1: eine schematisches Blockschaltbild einer Sanitärarmatur gemäß der Erfindung,

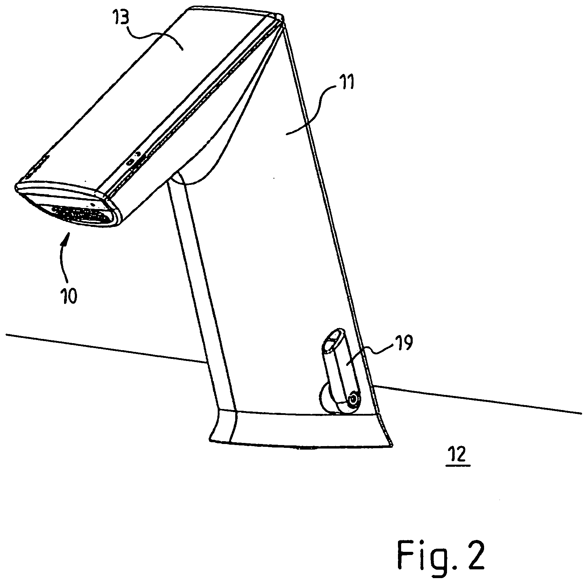

- Figur 2: eine schematische Darstellung einer Sanitärarmatur gemäß der Erfindung und
- Figur 3: eine schematische Darstellung einer weiteren Sanitärarmatur mit Anzeigedisplay gemäß der Erfindung im Ausschnitt und in einer Explosionsdarstellung.

Eine Sanitärarmatur kann wahlweise mit nur einem (kalten) Wasserzulauf 1, 2 oder mit zwei Wasserzuläufen 1, 2 warm und kalt betrieben werden. Im letztgenannten Fall ist vorzugsweise ein Mischventil 3 vorzusehen, so dass in einer gemeinsamen Wasserleitung 4 das Mischwasser strömt.

Ein zweites Stellglied 5 bzw. Absperrventil 5 ermöglicht eine Abtrennung an einer (symbolisch dargestellten) Trennstelle 6. Vorzugsweise wird das Ventil 5 dadurch betätigt, das ein erstes Stellglied 8 bzw. eine sog. Ventileinheit 8 demontiert, insb. mittels Rotation bzw. einem Bajonettverschluss entfernt wird, so dass zugleich das Ventil 5 verschlossen ist.

Die Ventileinheit 8 umfasst vorzugsweise ein Schmutzfilter 7 und ein Durchflussbegrenzer 9, die in Strömungsrichtung hinter dem Ventil 5 bzw. der Trennstelle 6 angeordnet sind.

Neben einer Turbine 18 mit elektrischem Generator kann optional auch eine Solarzelle 17 vorgesehen werden, so dass gemäß der Erfindung vor allem die Strömungsenergie des Wassers in elektrische Energie umgewandelt wird. Beispielsweise sind Batterien bzw. Akkus 18 vorgesehen zur Energieversorgung der elektrischen Komponenten (gegebenenfalls Ventil 8, Display 16 und/oder LED-Anzeige, nicht näher dargestellter Sensor etc.) und/oder zum Zwischenspeichern der elektrischen Energie von der Turbine 18 bzw. Solarzelle 17.

Vorzugsweise umfasst eine nicht näher dargestellte elektrische Kontrolleinheit einen Laderegler etc. für die Akkus 14. Ein Armaturengehäuse 11 ist fest am Waschbecken 12 oder dergleichen fixiert und ein Montagedeckel 13 kann vom Gehäuse 11 gelöst und wieder montiert/fixiert werden.

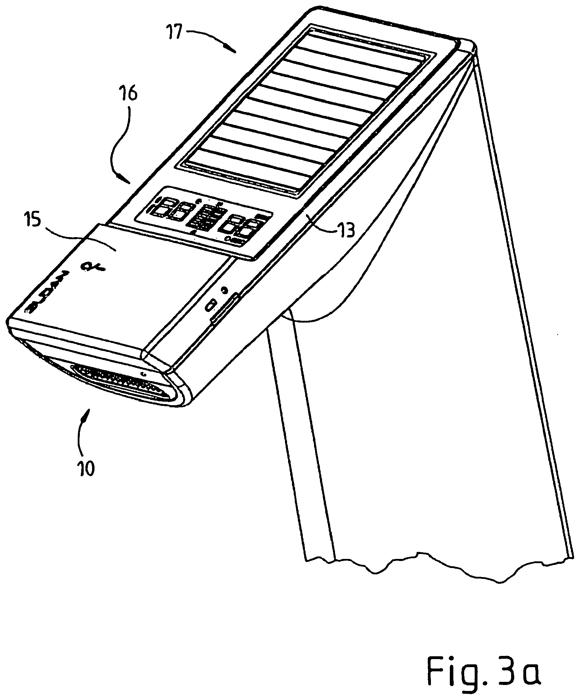

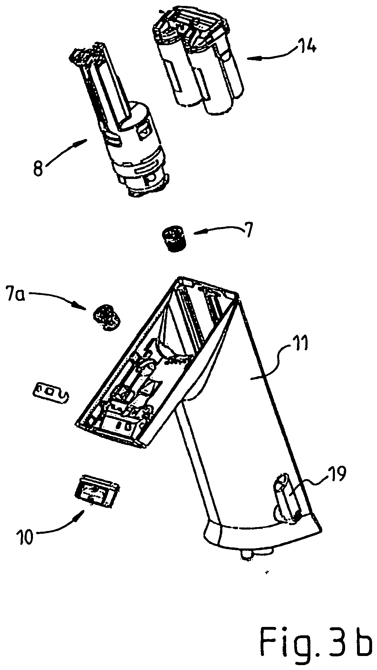

Durch die freie Öffnung 13 des Armaturengehäuses 11 können alle relevanten Komponenten herausgenommen und wieder eingesetzt werden. Ohne nähere Darstellung in der Figur 3b) wird die Turbine 18 mit Generator im Bereich unmittelbar vor dem Auslauf 10 bzw. Strahlregler 10, d.h. in vorteilhafter Weise im Bereich eines eingezeichneten Ersatzfilters 7a), angeordnet bzw. montiert. Hier im eher horizontal ausgerichteten Abschnitt des Armaturengehäuses 11 ist zum einen ein vorteilhaftes Platzangebot innerhalb des Grundkörpers 11 vorhanden. Zum anderen ist die Turbine 18 mit Generator sehr gut bei demontiertem Montagedeckel 13 zugänglich, so dass eine Wartung oder Reparatur/Austausch ohne großen Aufwand und gegebenenfalls sogar während des Wasserdurchflusses bzw. -ausflusses erfolgen kann.

Bei der dargestellten Variante der Sanitärarmatur mit einem ovalen bzw. eher rechteckförmigen Querschnitt der Armatur, d.h. die Breite ist größer als die Höhe/Tiefe, bietet es sich an, Turbine 18 und Generator seitlich versetzt bzw. nebeneinander anzuordnen und vorzugsweise mit einem vorteilhaften Übersetzungsgetriebe zu verbinden. Beispielsweise durch vorteilhafte Gestaltung ist für den unbedarften Benutzer nicht zu erkennen, dass der Deckel 13 abnehmbar ist. Dies ist in Bezug zur Vandalensicherheit von großem Vorteil.

### Bezugszeichenliste

- 1: Zulauf Kalt
- 2: Zulauf Warm (optional)
- 3: Mischventil (optional)
- 4: Mischwasser
- 5: Serviceventil = Absperrventil
- 6: Hydraulische Trennstelle
- 7: Filter
- 8: Durchflussventil (kann elektrisches, mechanisches Ventil, etc. sein)
- 9: Durchflussbegrenzer bzw. Durchflussregler
- 10: Auslauf
- 11: Armaturengehäuse
- 12: Montageplattform (z.B. Waschbecken)
- 13: Montagedeckel bzw. Öffnung
- 14: Akkumulatoren / Batterien
- 15: Elektrischer Taster/Schalter
- 16: Display
- 17: Solarzelle (optional)
- 18: Turbine mit Generator
- 19: Temperaturverstellhebel (bei Mischventileinsatz)

## Patentansprüche

1. Sanitärarmatur mit einem Armaturengehäuse (11) und einer Wasserleitung (4), wobei wenigstens ein elektrisch betätigbares Stellglied (8), insbesondere ein Durchflussventil (8), zum Verschließen und Öffnen der Wasserleitung (4) vorgesehen ist, wobei das Armaturengehäuse (11) wenigstens eine Öffnung und einen lösbaren, abdeckenden Montagedeckel (13) zum Öffnen des Armaturengehäuses (11) für Montage, Reparatur und/oder Wartung umfasst, wobei innerhalb des Armaturengehäuses wenigstens eine einen elektrischen Generator antreibende Turbine (18) zur Nutzung der Strömungsenergie des Wasserflusses vorgesehen ist, wobei die Turbine (18) im Bereich der Gehäuseöffnung hinter dem Montagedeckel (13) angeordnet und somit bei geöffnetem Montagedeckel (13) unmittelbar zugänglich ist, wobei die Turbine (18) mit Generator im Bereich unmittelbar vor dem Auslauf (10) angeordnet bzw. montiert ist, wobei die Wasserleitung (4) wenigstens im Bereich der Turbine (18) separat vom Gehäuse (11) ausgebildet ist, so dass die Wasserleitung (4) beim Öffnen des Montagedeckels (13) geschlossen bleibt, **dadurch gekennzeichnet, dass** innerhalb des Armaturengehäuses (11) wenigstens eine ein zweites Stellglied (5) aufweisende Absperrvorrichtung zum Absperren der Wasserleitung (4) angeordnet ist und dass das zweite Stellglied (5) eine Abtrennung an einer Trennstelle (6) ermöglicht, wobei das zweite Stellglied (5) dadurch betätigt wird, dass das erste Stellglied (8) demontiert wird, so dass zugleich das zweite Stellglied (5) verschlossen ist.

2. Sanitärarmatur nach Anspruch 1 **dadurch gekennzeichnet, dass** ein Akkumulator (14) ebenfalls im Bereich der mit dem Montagedeckel abzudeckenden Gehäuseöffnung angeordnet ist.

3. Sanitärarmatur nach einem der vorgenannten Ansprüche, **dadurch gekennzeichnet, dass** die Wasserleitung im Bereich der Turbine als Turbinengehäuse ausgebildet ist.

4. Sanitärarmatur nach einem der vorgenannten Ansprüche, **dadurch gekennzeichnet, dass** wenigsten ein elektrischer Akkumulator (14) zur Energiespeicherung vorgesehen ist.

5. Sanitärarmatur nach einem der vorgenannten Ansprüche, **dadurch gekennzeichnet, dass** eine Drehachse eines Turbinenschaufelrades der Turbine im Wesentlichen parallel zu einer Rotationsachse des Generators angeordnet ist.

6. Sanitärarmatur nach einem der vorgenannten Ansprüche, **dadurch gekennzeichnet, dass** zwischen der Turbine und dem Generator ein Übersetzungsgetriebe angeordnet ist.

7. Sanitärarmatur nach einem der vorgenannten Ansprüche, **dadurch gekennzeichnet, dass** der Generator und/oder das Übersetzungsgetriebe innerhalb eines wasserdichten Generatorgehäuses angeordnet ist.

8. Sanitärarmatur nach einem der vorgenannten Ansprüche, **dadurch gekennzeichnet, dass** das elektrisch betätigbare Stellglied (8) mit wenigstens einem Schmutzfilter (7) zum Filtern des Wasserflusses und/oder mit wenigstens einem Durchflussregler (9) zum Regeln der Wasserflussmenge und/oder mit dem elektrischen Generator und/oder mit der Turbine als Serviceeinheit zum gemeinsamen Demontieren und/oder Montieren ausgebildet ist.

9. Sanitärarmatur nach einem der vorgenannten Ansprüche, **dadurch gekennzeichnet, dass** der Querschnitt der Gehäuseöffnung größer als ein Querschnitt der Turbine und/oder des Generators und/oder des Übersetzungsgetriebes und/oder des Generatorgehäuses und/oder des Schmutzfilters und/oder des Durchflussreglers ist.

10. Sanitärarmatur nach einem der vorgenannten Ansprüche, **dadurch gekennzeichnet, dass** wenigstens eine Betätigungseinheit zum Betätigen des zweiten Stellgliedes vorgesehen ist.

11. Sanitärarmatur nach einem der vorgenannten Ansprüche, **dadurch gekennzeichnet, dass** die Betätigungseinheit als Fixiervorrichtung zum Fixieren und Lösen des elektrisch betätigbaren Stellgliedes und/oder der Serviceeinheit ausgebildet ist.

12. Sanitärarmatur nach einem der vorgenannten Ansprüche, **dadurch gekennzeichnet, dass** der Montagedeckel wenigstens eine Solarzelle (17) zur solaren Stromerzeugung und/oder eine Anzeigeeinheit (16) zum Anzeigen von Parametern des Wasserflusses und/oder von Parametern der Kontrolleinheit umfasst.

## Claims

1. Sanitary fitting comprising a fitting housing (11) and a water conduit (4), wherein at least one electrically activatable actuator (8), particularly a flow valve (8) is provided to open and close the water conduit (4), wherein the fitting housing (11) comprises at least one opening and a detachable, covering installation cover (13) for opening the fitting housing (11) for installation, repair, and/or maintenance, wherein within the fitting housing is provided at least one turbine (18) powering an electrical generator for utilizing the flow energy of the water flow, wherein the turbine (18) is arranged behind the installation cover (13) in the housing opening area and thus is directly accessible with the opened installation cover (13), wherein the turbine (18) with generator is arranged or installed in the area directly before the outlet (10), wherein the water conduit (4) is formed separately from the housing (11) in the area of the turbine (18) so that while the installation cover (13) is opened the water conduit remains closed, **characterised in that** at least one cut-off apparatus having a second actuator (5) is arranged within the fitting housing (11) for cutting off the water conduit (4) and that the second actuator (5) enables a separation at a separation point (6), wherein the second actuator (5) is activated by uninstalling the first actuator (8) so that at the same time the second actuator (5) is closed.

2. Sanitary fitting according to claim 1, **characterised in that** a storage battery (14) is likewise arranged in the area with the housing opening that is covered by the installation cover.

3. Sanitary fitting according to one of the foregoing claims, **characterised in that** the water conduit is formed as a turbine housing in the turbine area.

4. Sanitary fitting according to one of the foregoing claims, **characterised in that** at least one electrical storage battery (14) is provided for energy storage.

5. Sanitary fitting according to one of the foregoing claims, **characterised in that** a swivel axis of a turbine blade wheel of the turbine is arranged to be essentially parallel to a rotation axis of the generator.

6. Sanitary fitting according to one of the foregoing claims, **characterised in that** a transmission gear is arranged between the turbine and the generator.

7. Sanitary fitting according to one of the foregoing claims, **characterised in that** the generator and/or the transmission gear is arranged within a watertight generator housing.

8. Sanitary fitting according to one of the foregoing claims, **characterised in that** the electrically activatable actuator (8) with at least one contaminant filter (7) formed to filter the water flow and/or with at least one flow regulator (9) to regulate the water flow and/or with the electrical generator and/or with the turbine as a service unit for the common uninstallation and/or installation.

9. Sanitary fitting according to one of the foregoing claims, **characterised in that** the cross-section of the housing opening is larger than a cross-section of the turbine and/or of the generator and/or of the transmission gear and/or of the generator housing and/or of the contaminant filter and/or of the flow regulator.

10. Sanitary fitting according to one of the foregoing claims, **characterised in that** at least one activation unit is provided for activating the second actuator.

11. Sanitary fitting according to one of the foregoing claims, **characterised in that** the activating unit is formed as a fixing device for fixing and removing the electrically activated actuator and/or the service unit.

12. Sanitary fitting according to one of the foregoing claims, **characterised in that** the installation cover comprises at least one solar cell (17) for solar power production and/or an display unit (16) for displaying the water flow parameters and/or the control unit parameters.

## Revendications

1. Robinetterie sanitaire comprenant un boîtier (11) de robinetterie et une conduite d'eau (4), au moins un élément de réglage (8) électrique, en particulier une soupape de débit (8) étant destinée à fermer et à ouvrir la conduite d'eau (4), le boîtier (11) de robinetterie comprenant au moins une ouverture et un couvercle de montage (13) amovible recouvrant destiné à ouvrir le boîtier (11) de robinetterie pour le montage, la réparation et/ou l'entretien, le boîtier de robinetterie comprenant au moins une turbine (18) entraînant un générateur électrique pour utiliser l'énergie de l'écoulement d'eau, la turbine (18) étant disposée dans la zone de l'ouverture de boîtier derrière le couvercle (13) de montage et étant ainsi directement accessible lorsque le couvercle (13) de montage est ouvert, la turbine (18) conjointement avec le générateur étant disposés ou montés dans la zone directement avant l'évacuation (10), la conduite d'eau (4) se présentant au moins dans la zone de la turbine (18) séparément du boîtier (11), de sorte que la conduite d'eau (4) demeure fermée lors de l'ouverture du couvercle (13) de montage, **caractérisée en ce que** dans le boîtier (11) de robinetterie est disposé au moins un dispositif de fermeture comportant un second élément de réglage (5) destiné à fermer la conduite d'eau (4) et **en ce que** le second élément de réglage (5) permet une séparation au niveau d'un point de séparation (6), le second élément de réglage (5) étant actionné par le fait que le premier élément de réglage (8) est démonté de sorte que simultanément le second élément de réglage (5) se ferme.

2. Robinetterie sanitaire selon la revendication 1, **caractérisée en ce qu'**un accumulateur (14) est disposé également dans la zone de l'ouverture de boîtier à recouvrir par le couvercle de montage.

3. Robinetterie sanitaire selon l'une quelconque des revendications précédentes, **caractérisée en ce que** la conduite d'eau est conçue sous la forme d'un boîtier de turbine dans la zone de la turbine.

4. Robinetterie sanitaire selon l'une quelconque des revendications précédentes, **caractérisée en ce qu'**au moins un accumulateur électrique (14) sert à accumuler l'énergie.

5. Robinetterie sanitaire selon l'une quelconque des revendications précédentes, **caractérisée en ce qu'**un axe de rotation d'une roue à aubes de turbine est aménagé essentiellement parallèle à un axe de rotation du générateur.

6. Robinetterie sanitaire selon l'une quelconque des revendications précédentes, **caractérisée en ce qu'**un mécanisme de transmission est disposé entre la turbine et le générateur.

7. Robinetterie sanitaire selon l'une quelconque des revendications précédentes, **caractérisée en ce que** le générateur et/ou le mécanisme de transmission est disposé dans un boîtier de générateur étanche à l'eau.

8. Robinetterie sanitaire selon l'une quelconque des revendications précédentes, **caractérisée en ce que** l'élément de réglage (8) électrique avec au moins un filtre à impuretés (7)destiné à filtrer le débit d'eau et/ou avec au moins un régulateur de débit (9) destiné à régler la quantité d'eau et/ou avec le générateur électrique et/ou avec la turbine est conçu sous la forme d'une unité d'entretien destinée au démontage et/ou montage commun.

9. Robinetterie sanitaire selon l'une quelconque des revendications précédentes, **caractérisée en ce que** la section transversale de l'ouverture de boîtier est supérieure à une section transversale de la turbine et/ou du générateur et/ou du mécanisme de transmission et/ou du boîtier de générateur et/ou du filtre à impuretés et/ou du régulateur de débit.

10. Robinetterie sanitaire selon l'une quelconque des revendications précédentes, **caractérisée en ce qu'**elle comprend au moins une unité d'actionnement destinée à actionner le second élément de réglage.

11. Robinetterie sanitaire selon l'une quelconque des revendications précédentes, **caractérisée en ce que** l'unité d'actionnement est conçue sous la forme d'un dispositif de fixation destiné à fixer et à libérer l'élément de réglage électrique et/ou l'unité d'entretien.

12. Robinetterie sanitaire selon l'une quelconque des revendications précédentes, **caractérisée en ce que** le couvercle de montage comprend au moins une cellule solaire (17) destinée à produire une énergie solaire et/ou une unité d'affichage (16) destinée à afficher des paramètres du débit d'eau et/ou des paramètres de l'unité de contrôle.
